# EUROPEAN PATENT APPLICATION

(11) **EP 4 641 818 A1**
(43) Date of publication of application: **29.10.2025**
(21) Application number: 23905201.2
(22) Date of filing: 29.06.2023
(51) Int. Cl.: H01M 50/552, H01M 50/188, H01M 50/184, H01M 50/172

(54) **COMPOSITE POLE, END PLATE ASSEMBLY, AND BATTERY**

(30) Priority: 19.12.2022 CN 202211634801
(71) Applicant: BYD Company Limited, Shenzhen, Guangdong 518118 (CN)
(72) Inventor: LIN, Shuishan, Shenzhen, Guangdong 518118 (CN); CAO, Dongkui, Shenzhen, Guangdong 518118 (CN); HUANG, Jian, Shenzhen, Guangdong 518118 (CN); CHEN, Mingwen, Shenzhen, Guangdong 518118 (CN)
(74) Representative: Mathys & Squire
(86) International application number: PCT/CN2023/104128
(87) International publication number: WO 2024/131017

(57) **Abstract**

A battery is provided, and may be used in a vehicle. The battery includes a composite pole or an end plate assembly. The composite pole includes a first electrode and a second electrode, the first electrode and the second electrode are electrically connected, the first electrode is configured to electrically connect to a first battery cell, and the second electrode is configured to electrically connect to a second battery cell. At least one of the first electrode and the second electrode is configured to connect to an end plate of a battery cell that has a through hole, at least one of the first electrode and the second electrode includes a pole and a connection assembly, the connection assembly is sleeved on the pole, and is configured to connect to the end plate, and the connection assembly fits with the pole to form a sealing structure, so as to close the through hole on the end plate.

## Description

### CROSS-REFERENCE TO RELATED APPLICATIONS

This application claims priority to Chinese Patent Application No. 202211634801.4, filed on December 19, 2022 and entitled "COMPOSITE POLE, END PLATE ASSEMBLY, BATTERY, AND VEHICLE", which is incorporated herein by reference in its entirety.

### TECHNICAL FIELD

This application relates to the field of battery technologies, and in particular, to a composite pole, an end plate assembly with the composite pole, and a battery with the end plate assembly.

### BACKGROUND

With the popularity of new energy vehicles, the requirements for the use of power batteries in the new energy vehicles are becoming increasingly demanding. In related technologies, during the use of a power battery pack, because an electrolyte is not isolated, the battery has problems that the electrolyte cannot withstand a high voltage.

### SUMMARY

This application is intended to resolve at least one of the technical problems in a related technology to some extent. Therefore, an objective of this application is to provide a composite pole, so that a sealing structure can be formed between a pole and an end plate, so as to implement an electrical connection and isolate an electrolyte, so that the electrolyte can withstand a high voltage.

Another objective of this application is to provide an end plate assembly, including the foregoing composite pole.

Still another objective of this application is to provide a battery, including the foregoing composite pole.

A composite pole according to an embodiment of this application includes a first electrode and a second electrode, the first electrode and the second electrode are electrically connected, the first electrode is configured to electrically connect to a first battery cell, and the second electrode is configured to electrically connect to a second battery cell. At least one of the first electrode and the second electrode is configured to connect to an end plate of a battery cell that has a through hole, at least one of the first electrode and the second electrode including a pole and a connection assembly, the connection assembly being sleeved on the pole, and configured to connect to the end plate, and the connection assembly fits with the pole to form a sealing structure, so as to close the through hole on the end plate.

According to the composite pole in this embodiment of this application, the connection assembly suitable for closing the through hole on the end plate is disposed between the pole and the end plate, so that a sealing structure can be formed between the pole and the end plate, so as to implement an electrical connection and isolate an electrolyte, so that the electrolyte can withstand a high voltage.

In addition, the composite pole according to the foregoing embodiment of this application may further have the following additional technical features.

In some examples of this application, the pole has a first end and a second end opposite to each other in an axial direction, and the first end of the pole is configured to electrically connect to the battery cell relative to the through hole on the end plate.

In some examples of this application, the connection assembly includes an insulation ring and an adapter plate. The insulation ring is sleeved on the pole, and is fixedly connected to and fits with the pole in a sealed manner; and the adapter plate is fixedly connected to the insulation ring, and is configured to connect to the end plate.

In some examples of this application, the adapter plate is annular, and is disposed around the axial direction of the pole, and an inner diameter of the adapter plate is greater than a diameter of the pole, so that the adapter plate is spaced apart from the pole; and the adapter plate is disposed on the insulation ring.

In some examples of this application, a difference between the inner diameter of the adapter plate and the diameter of the pole is in a range of 3 millimeters to 10 millimeters.

In some examples of this application, an insulation structure is disposed between the adapter plate and the pole, and the insulation structure electrically isolates the adapter plate from the pole.

In some examples of this application, a first flanged portion extending in a radial direction of the pole is disposed at the second end of the pole, the first flanged portion is in an annular shape around the axial direction of the pole, and the first flanged portion, the insulation ring, and the adapter plate are successively stacked in the axial direction of the pole, and are fixedly connected.

In some examples of this application, the insulation ring is a ceramic ring, and both the first flanged portion and the adapter plate are fastened to the ceramic ring through welding.

In some examples of this application, the composite pole further includes a first sampling member. The first electrode and the second electrode are respectively disposed on two opposite sides of the first sampling member, the first electrode and the second electrode are electrically connected to the first sampling member, and the first sampling member is configured to electrically connect to a sampling circuit.

In some examples of this application, the first electrode and the second electrode are arranged on the two opposite sides of the first sampling member, and the first sampling member is in a sheet shape.

An end plate assembly according to an embodiment of this application includes an end plate and the foregoing composite pole. The end plate has a first side and a second side opposite to each other, and a through hole is provided on the end plate. The connection assembly is stacked on the first side of the end plate, the first end of the pole stretches from the through hole into the second side of the end plate for electrically connecting to a battery cell body, and the connection assembly fits with the pole to close the through hole.

According to the end plate assembly in this embodiment of this application, the foregoing composite pole is used in the end plate assembly, so that electrical connection can be implemented and an electrolyte can be isolated, which helps improve stability and security during use.

In some examples of this application, a sinking groove is provided on the first side of the end plate, the sinking groove surrounds the through hole, and at least a part of the connection assembly is embedded in the sinking groove.

A battery according to an embodiment of this application includes a first battery cell, a second battery cell, and the foregoing composite pole. The composite pole is disposed between the first battery cell and the second battery cell, the first electrode is electrically connected to the first battery cell, and the second electrode is electrically connected to the second battery cell.

According to the battery in this embodiment of this application, the foregoing composite pole is used, so that an electrolyte can be isolated, and the electrolyte can withstand a high voltage, which helps improve battery safety.

In some examples of this application, the battery includes a battery cell body and the foregoing end plate assembly. The end plate covers an end of the battery cell body, and the first end of the pole is electrically connected to the battery cell body.

According to the battery in this embodiment of this application, the foregoing end plate assembly is used in the battery, so that electrical connection can be implemented and an electrolyte can be isolated, which helps improve stability and security during use.

### BRIEF DESCRIPTION OF DRAWINGS

FIG. 1 is a schematic diagram of a structure of a composite pole according to some embodiments of this application;
FIG. 2 is a schematic diagram of a structure of a composite pole according to some embodiments of this application (which shows a first electrode, a second electrode, and a first sampling member);
FIG. 3 is a schematic diagram of a structure of an end plate assembly according to some embodiments of this application;
FIG. 4 is a cross-sectional view of an end plate assembly according to some embodiments of this application; and
FIG. 5 is a schematic diagram of a structure of a battery according to some embodiments of this application.

Reference numerals:
100: battery; 10a: first electrode; 10b: second electrode; 11: pole; 111: first flanged portion; 112: abutting portion; 12: connection assembly; 121: insulation ring; 122: adapter plate; 1221: first ring portion; 1222: second ring portion; 1223: connecting portion; 13: step portion; 20: end plate assembly; 211: end plate; 201: through hole; 202: sinking groove; 30: composite pole; 33: first sampling member; 41: first battery cell; and 42: second battery cell.

### DESCRIPTION OF EMBODIMENTS

The following describes in detail embodiments of this application, examples of the embodiments are shown in the accompanying drawings. Same or similar reference numerals throughout the accompanying drawings indicate same or similar elements or elements having same or similar functions. The embodiments described below with reference to the drawings are examples and aim to explain this application and cannot be construed as limiting this application.

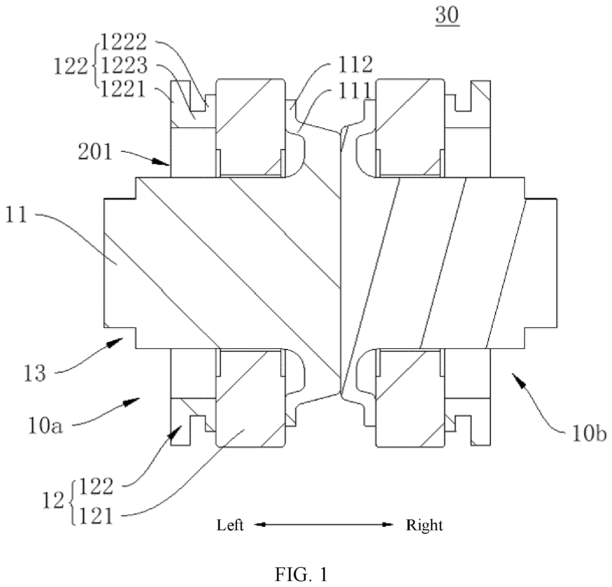

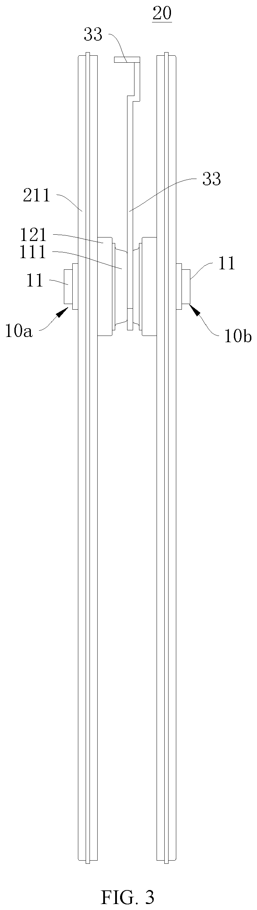

With reference to FIG. 1 to FIG. 5, a composite pole 30 according to an embodiment of this application may include a first electrode 10a and a second electrode 10b, and the first electrode 10a is electrically connected to the second electrode 10b. The first electrode 10a is configured to electrically connect to a first battery cell 41, and the second electrode 10b is configured to electrically connect to a second battery cell 42, so as to implement electrical connection. Further, at least one of the first electrode 10a and the second electrode 10b is configured to connect to an end plate 211 of a battery cell that has a through hole 201, at least one of the first electrode 10a and the second electrode 10b including a pole 11 and a connection assembly 12, the connection assembly 12 being sleeved on the pole 11, and configured to connect to the end plate 211, and the connection assembly 12 fits with the pole 11 to form a sealing structure, so as to close the through hole 201 on the end plate 211. Specifically, the connection assembly 12 suitable for closing the through hole 201 on the end plate 211 is disposed between the pole 11 and the end plate 211, so that a sealing structure can be formed between the pole 11 and the end plate 211, so as to implement an electrical connection and isolate an electrolyte.

According to the composite pole 30 in this embodiment of this application, when at least one of the first electrode 10a and the second electrode 10b is disposed as an electrode including the pole 11 and the connection assembly 12, the sealing structure formed by the fit between the connection assembly 12 and the pole 11 is disposed between the first electrode 10a and the second motor. Therefore, electrolyte isolation can be implemented between the first electrode 10a and the second electrode 10b. Certainly, alternatively, each of the first electrode 10a and the second electrode 10b may include the pole 11 and the connection assembly 12. This can further improve the effect of isolating the electrolyte, and improve security.

It should be noted that FIG. 1 shows a structure of the first electrode 10a and a structure of the second electrode 10b. The structure of the first electrode 10a and the structure of the second electrode 10b may be the same. Specifically, the first electrode 10a may include the pole 11 and the connection assembly 12, and the second electrode 10b may also include the pole 11 and the connection assembly 12, or each of the first electrode 10a and the second electrode 10b includes the pole 11 and the connection assembly 12.

In some embodiments of this application, the pole 11 has a first end and a second end opposite to each other in an axial direction. As shown in FIG. 1, the axial direction of the pole 11 is a left-right direction shown in the figure, the first end of the pole 11 may be a left end of the pole 11, and the second end of the pole 11 may be a right end of the pole 11.

The first end of the pole 11 is configured to electrically connect to the battery cell relative to the through hole 201 on the end plate 211, the connection assembly 12 is sleeved on the pole 11, and is configured to connect to the end plate 211, and the connection assembly 12 fits with the pole 11 to form the sealing structure, so as to close the through hole 201 on the end plate 211. In other words, one end of the pole 11 passes through the through hole 201 of the end plate 211 to be electrically connected to the battery cell, so as to achieve an electrical connection. However, the connection assembly 12 sleeved on the pole 11 may close the through hole 201 on the end plate 211, so as to implement electrolyte isolation, avoid electrolyte leakage, and improve operating stability and security of the electrode.

With reference to FIG. 1, in some embodiments of this application, the connection assembly 12 includes an insulation ring 121 and an adapter plate 122. Specifically, the insulation ring 121 is sleeved on the pole 11, and is fixedly connected to and fits with the pole 11 in a sealed manner, so as to improve connection stability, form a sealing structure, and achieve an insulation effect. Further, the adapter plate 122 is fixedly connected to the insulation ring 121, and is configured to connect to the end plate 211. Specifically, the adapter plate 122 is separately connected to the insulation ring 121 and the end plate 211, and the adapter plate 122 is fixedly connected to the insulation ring 121. In this way, sealing between the pole 11 and the end plate 211 can be implemented through the connection assembly 12 without contact between the pole 11 and the end plate 211, which helps improve a sealing effect.

The insulation ring 121 and the adapter plate 122 in this application may be configured as an integral structure, or may be configured as a split structure. For example, the adapter plate 122 and the insulation ring 121 are integrally formed. Alternatively, the adapter plate 122 and the insulation ring 121 are separately formed and then assembled together. In addition, the adapter plate 122 and the insulation ring 121 may be made of the same material. Alternatively, the adapter plate 122 and the insulation ring 121 may be made of different materials. The insulation ring 121 in this application may be of a ceramic material, the adapter plate 121 may be of an aluminum material, and the insulation ring 121 and the adapter plate 122 are separately formed, and are connected together through welding.

In addition, the adapter plate 122 in this application is configured to connect to the end plate 211, so as to implement connection between the electrode and the end plate 211. For example, the adapter plate 122 may be stacked on and welded to the end plate 211.

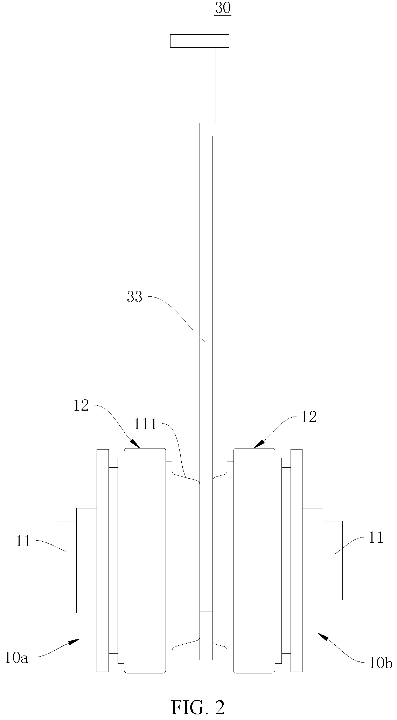

With reference to FIG. 1 and FIG. 2, in some embodiments of this application, the adapter plate 122 is annular to be adapted to fit with the through hole 201 on the end plate 211 and the pole 11, and has high structural stability. Specifically, the adapter plate 122 is disposed around the axial direction of the pole 11, and an inner diameter of the adapter plate 122 is greater than a diameter of the pole 11, so that the adapter plate 122 is spaced apart from the pole 11, so as to avoid contact between the pole 11 and the adapter plate 122, and avoid a short circuit. The adapter plate 122 is disposed on the insulation ring 121, so as to avoid conducting of the adapter plate 122, which helps improve an insulation effect.

In some embodiments of this application, a difference between the inner diameter of the adapter plate 122 and the diameter of the pole 11 is in a range of 3 millimeters to 10 millimeters, that is, the inner diameter of the adapter plate 122 needs to be greater than the diameter of the pole 11, and a difference between an inner circle diameter of the adapter plate 122 and a diameter of an outer circumferential surface of the pole 11 is greater than or equal to 3 millimeters and less than or equal to 10 millimeters, so that an inner surface of the adapter plate 122 is spaced apart from an outer surface of the pole 11, thereby preventing electrical conduction from the adapter plate 122 to the pole 11. More specifically, a safe distance is set between the adapter plate 122 and the pole 11, so as to improve security. For example, the difference between the inner diameter of the adapter plate 122 and the diameter of the pole 11 may be 5 millimeters, 8 millimeters, or the like. In other words, the safe distance may ensure safety of the electrode, and may further prevent an excessively large spacing between the adapter plate 122 and the pole 11 from increasing a size of a battery 100.

Certainly, based on an actual situation, the difference between the inner diameter of the adapter plate 122 and the diameter of the pole 11 may alternatively be set to be less than 3 millimeters or greater than 10 millimeters. For example, the difference between the inner diameter of the adapter plate 122 and the diameter of the pole 11 is set to 2 millimeters or 12 millimeters. This application is not limited thereto.

Certainly, there may be a plurality of different insulation manners between the adapter plate 122 and the pole 11 in this application. For example, an insulation structure may be disposed between the adapter plate 122 and the pole 11, and the insulation structure electrically isolates the adapter plate 122 from the pole 11, so as to improve an insulation and isolation effect. Specifically, an insulation barrier may be disposed between the adapter plate 122 and the pole 11, and the insulation barrier is disposed to completely isolate the adapter plate 122 from the pole 11. In this case, when the insulation barrier has a sufficient insulation capability, the adapter plate 122, the insulation barrier, and the pole 11 may be stacked for fitting, and no gap or only a small gap may be disposed between the adapter plate 122, the insulation barrier, and the pole 11.

The insulation structure may alternatively be disposed in another form. For example, an insulation adhesive is filled between the adapter plate 122 and the pole 11. In addition, the foregoing descriptions are merely some specific implementations of this application, and are not intended to constitute a limitation on the protection scope of this application. An insulation structure in a related technology may also be applied to this application.

With reference to FIG. 1, in some embodiments of this application, a step portion 13 is disposed at the first end of the pole 11, and the step portion 13 can improve stability of fitting between the pole 11 and the battery cell, which helps improve structural stability.

With reference to FIG. 1 and FIG. 2, in some embodiments of this application, a first flanged portion 111 extending in a radial direction of the pole 11 is disposed at the second end of the pole 11, and the first flanged portion 111 is in an annular shape around the axial direction of the pole 11. The first flanged portion 111 may play a supporting role at an end of the pole 11, so as to improve structural stability of the pole 11. The first flanged portion 111, the insulation ring 121, and the adapter plate 122 are successively stacked in the axial direction of the pole 11, and are fixedly connected. Therefore, a multi-layer stacked structure may be formed in the axial direction, so as to improve structural strength, facilitate spatial arrangement, and facilitate improvement of overall structural stability of the electrode. Specifically, the first flanged portion 111 is connected to the second end of the pole 11, and extends in an annular shape in a radial direction of the second end of the pole 11. An abutting portion 112 is disposed at an end portion of a side of the first flanged portion 111 that is away from the pole 11, and the abutting portion 112 is configured in a form suitable for abutting against the insulation ring 121. For example, the abutting portion 112 is in a strip shape, and a side surface of the abutting portion 112 is configured in a flat shape suitable for attaching to an outer surface of the insulation ring 121, so as to improve stability of connection between the first flanged portion 111 and the insulation ring 121. In other words, during use, the adapter plate 122, the insulation ring 121, and the abutting portion 112 are stacked and connected in the axial direction of the pole 11. More specifically, there is a gap between the first flanged portion 111 and the insulation ring 121, so as to help simplify battery structure and reduce battery weight.

In some embodiments of this application, the insulation ring 121 is a ceramic ring, so that the insulation ring 121 has good chemical stability and thermal stability, and corrosion-resistance performance can be further improved, to prevent the insulation ring 121 from being corroded by the electrolyte. Specifically, both the first flanged portion 111 and the adapter plate 122 are fastened to the ceramic ring through welding, which can improve connection stability, and welding connection helps improve a sealing effect.

In addition, the insulation ring 121 may also be disposed to connect to the pole 11 through welding.

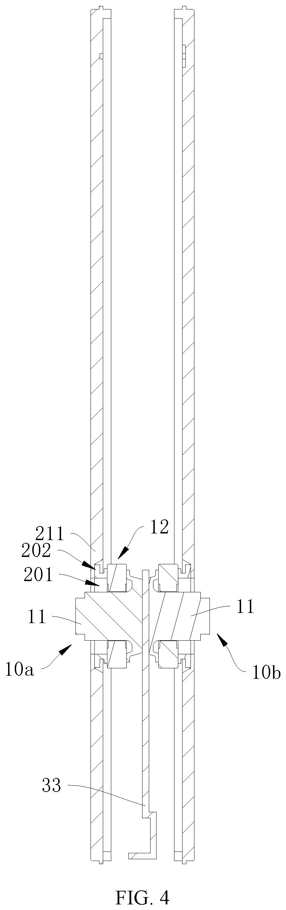

With reference to FIG. 2 and FIG. 4, in some embodiments of this application, the composite pole 30 further includes a first sampling member 33, the first electrode 10a and the second electrode 10b are respectively disposed on two opposite sides of the first sampling member 33, the first electrode 10a and the second electrode 10b are electrically connected to the first sampling member 33, and the first sampling member 33 is configured to electrically connect to a sampling circuit. In other words, the first sampling member 33 for intermediate transition sampling is disposed between the first electrode 10a and the second electrode 10b, so that the first electrode 10a is electrically connected to the first sampling member 33, and the second electrode 10b is electrically connected to the first sampling member 33, which helps obtain a voltage between the first electrode 10a and the second electrode 10b, and facilitates management and control of the composite pole 30.

Optionally, the first sampling member 33 may be made of a metal material to improve electrical conduction, for example, may be made of aluminum. Further, the pole 11 may be made of a metal material. For example, a positive pole may be made of aluminum, and a negative pole may be made of copper, or the two may be made of a same material such as nickel or iron.

In some embodiments of this application, the first electrode 10a and the second electrode 10b are arranged on the two opposite sides of the first sampling member 33, so that the first sampling member 33 is directly connected to the first electrode 10a and the second electrode 10b. In addition, the first sampling member 33 is in a sheet shape, which helps enlarge a contact area between the first sampling member 33 and each of the first electrode 10a and the second electrode 10b, improves an electrical connection effect, facilitates space arrangement, and helps reduce a volume of the battery 100.

With reference to FIG. 1 to FIG. 5, an end plate assembly 20 according to an embodiment of this application may include an end plate 211 and the foregoing composite pole 30. The end plate 211 has a first side and a second side that are opposite to each other. The first side of the end plate 211 may be a side that faces away from internal space of a battery cell body, and the second side of the end plate 211 may be a side that faces the internal space of the battery cell body. In addition, with reference to FIG. 4, the first side of the end plate 211 may be a right side of the end plate 211, and the second side of the end plate 211 may be a left side of the end plate 211.

A through hole 201 is provided on the end plate 211, the connection assembly 12 is stacked on the first side of the end plate 211, the first end of the pole 11 stretches from the through hole 201 into the second side of the end plate 211 for electrically connecting to the battery cell body, and the connection assembly 12 fits with the pole 11 to close the through hole 201. In other words, the first end of the pole 11 may pass through the through hole 201 to be electrically connected to the battery cell body on the second side of the end plate 211. The second end of the pole 11 is located on the first side of the end plate 211, and the connection assembly 12 is sleeved on the pole 11, and plays a sealing role between the pole 11 and the first side of the end plate 211. In addition, the connection assembly 12 is connected to the first side of the end plate 211 in a stacking manner, thereby improving a sealing effect, improving an effect of isolating the electrolyte, and further improving connection stability.

According to the end plate assembly 20 in this embodiment of this application, the pole 11 is sealed and connected on the first side of the end plate 211 by using the connection assembly 12, and the pole 11 is electrically connected to the battery cell body on the second side of the end plate 211, so that the end plate assembly 20 can implement an electrical connection and isolate the electrolyte, which helps improve stability and security during use.

With reference to FIG. 4, in some embodiments of this application, a sinking groove 202 is provided on the first side of the end plate 211, the sinking groove 202 surrounds the through hole 201, and at least a part of the connection assembly 12 is embedded in the sinking groove 202. Specifically, the sinking groove 202 may improve connection stability of the connection assembly 12 at the through hole 201, thereby helping enlarge a contact area between the connection assembly 12 and the end plate 211. At least a part of the connection assembly 12 is embedded in the sinking groove 202, so as to improve tightness of connection between the connection assembly 12 and the end plate 211, thereby helping improving structural stability and a sealing effect.

With reference to FIG. 1 and FIG. 4, according to the end plate assembly 20 in this embodiment of this application, the adapter plate 122 includes a first ring portion 1221, a second ring portion 1222, and a connecting portion 1223. The connecting portion 1223 is separately connected to the first ring portion 1221 and the second ring portion 1222 in the axial direction of the pole 11, and the connecting portion 1223 is connected between the first ring portion 1221 and the second ring portion 1222. A diameter of the first ring portion 1221 is greater than a diameter of the second ring portion 1222. During assembly, the first ring portion 1221 is embedded in the sinking groove 202, the second ring portion 1222 is located on the first side of the end plate 211, and the second ring portion 1222 is connected to the insulation ring 121 in a stacking manner.

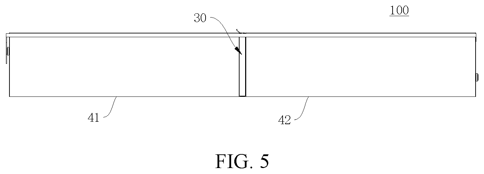

With reference to FIG. 5, a battery 100 according to an embodiment of this application includes a first battery cell 41, a second battery cell 42, and the foregoing composite pole 30. The composite pole 30 is disposed between the first battery cell 41 and the second battery cell 42, the first electrode 10a is electrically connected to the first battery cell 41, and the second electrode 10b is electrically connected to the second battery cell 42.

In some embodiments of this application, a housing is disposed on an outer circumference of the first battery cell 41 and the second battery cell 42, to be suitable for protecting the battery cell. The housing may be an aluminum housing.

According to the battery 100 in this embodiment of this application, the foregoing composite pole 30 is used, so that an electrolyte can be isolated, and the electrolyte can withstand a high voltage, which helps improve security of the battery 100.

The battery according to this embodiment of this application includes a battery cell body and the foregoing end plate assembly 20. The end plate 211 covers an end portion of the battery cell body, so as to isolate the electrolyte. The end plate 211 may further play a supporting and protective role, so as to improve stability of a structure of the lift battery 100. In addition, the first end of the pole 11 is electrically connected to the battery cell body, so as to implement electrical connection between the pole 11 and the battery cell.

According to the battery in this embodiment of this application, the foregoing end plate assembly 20 is used in the battery, the end plate 211 covers the end portion of the battery cell body, and the pole 11 is electrically connected to the battery cell body, so that electrical connection can be implemented and the electrolyte can be isolated, thereby improving application stability and security of the battery.

The battery 100 according to this embodiment of this application may be used in a vehicle. The foregoing battery 100 is used in the vehicle, so that driving safety of the vehicle can be improved.

In the description of this application, it should be understood that the orientation or positional relationship indicated by the terms "inner", "outer", "axial", "radial", "circumferential", and the like is based on the orientation or positional relationship shown in the accompanying drawings, and is only for ease of describing this application and simplifying the description, rather than indicating or implying that a specified apparatus or element necessarily has a specific orientation or is constructed and operated in a specific orientation. Therefore, the terms should not be construed as a limitation on this application.

In addition, terms "first" and "second" are merely used for description purposes, and shall not be understood as indicating or implying relative importance or implicitly indicating a quantity of technical features indicated. Therefore, a feature defined by "first" or "second" may explicitly or implicitly include at least one such feature. In the description of this application, "a plurality of" means at least two, for example, two or three, unless otherwise clearly and specifically defined.

In this application, unless otherwise clearly specified and defined, terms such as "mount", "interconnect", "connect", and "fix" should be understood in a broad sense, for example, may be a fixed connection, a detachable connection, or an integral connection; may be a mechanical connection or electrical connection; or may be a direct connection, an indirect connection through an intermediate medium, an internal connection between two elements, or an interaction relationship between two elements, unless otherwise clearly defined. A person of ordinary skill in the art can understand specific meanings of these terms in this application based on specific situations.

In this application, unless otherwise clearly specified and defined, that a first feature is "above" or "below" a second feature may be that the first and second features are in direct contact, or the first and second features are in indirect contact through an intermediate medium. In addition, that the first feature is "on", "above", and "over" the second feature may be that the first feature is directly above or obliquely above the second feature, or merely indicates that a horizontal height of the first feature is higher than that of the second feature. That the first feature is "under", "below", and "beneath" the second feature may be that the first feature is directly below or obliquely below the second feature, or merely indicates that a horizontal height of the first feature is less than that of the second feature.

In the description of this specification, descriptions referring to the terms "one embodiment", "some embodiments", "examples", "specific examples" or "some examples" mean that specific features, structures, materials, or characteristics described with reference to this embodiment or example are included in at least one embodiment or example of this application. In this specification, schematic expression of the above terms does not necessarily specific to the same embodiment or example. Moreover, the described specific features, structures, materials, or characteristics can be combined in any one or more embodiments or examples appropriately. In addition, a person skilled in the art can integrate or combine different embodiments or examples and characteristics of different embodiments or examples described in this specification, provided that they do not conflict with each other.

Although the embodiments of this application have already been illustrated and described above, it may be understood that the embodiments are examples but cannot be understood as a limitation on this application. A person of ordinary skill in the art can make changes, modifications, replacements, or variations to the embodiments within the scope of this application.

## Claims

1. A composite pole (30), comprising a first electrode (10a) and a second electrode (10b), wherein the first electrode (10a) is electrically connected to the second electrode (10b), the first electrode (10a) is configured to electrically connect to a first battery cell (41), and the second electrode (10b) is configured to electrically connect to a second battery cell (42), wherein
at least one of the first electrode (10a) and the second electrode (10b) is configured to connect to an end plate (211) of a battery cell that has a through hole (201), at least one of the first electrode (10a) and the second electrode (10b) comprises a pole (11) and a connection assembly (12), the connection assembly (12) is sleeved on the pole (11), and is configured to connect to the end plate (211), and the connection assembly (12) fits with the pole (11) to form a sealing structure, so as to close the through hole (201) on the end plate (211).

2. The composite pole (30) according to claim 1, wherein the pole (11) has a first end and a second end opposite to each other in an axial direction, and the first end of the pole (11) is configured to electrically connect to the battery cell relative to the through hole (201) on the end plate (211).

3. The composite pole (30) according to claim 2, wherein the connection assembly (12) comprises:
an insulation ring (121), wherein the insulation ring (121) is sleeved on the pole (11), and is fixedly connected to and fits with the pole (11) in a sealed manner; and
an adapter plate (122), wherein the adapter plate (122) is fixedly connected to the insulation ring (121), and is configured to connect to the end plate (211).

4. The composite pole (30) according to claim 3, wherein the adapter plate (122) is annular, and is disposed around the axial direction of the pole (11), and an inner diameter of the adapter plate (122) is greater than a diameter of the pole (11), so that the adapter plate (122) is spaced apart from the pole (11); and the adapter plate (122) is disposed on the insulation ring (121).

5. The composite pole (30) according to claim 3 or 4, wherein a difference between the inner diameter of the adapter plate (122) and the diameter of the pole (11) is in a range of 3 millimeters to 10 millimeters.

6. The composite pole (30) according to claim 4 or 5, wherein an insulation structure is disposed between the adapter plate (122) and the pole (11), and the insulation structure electrically isolates the adapter plate (122) from the pole (11).

7. The composite pole (30) according to any one of claims 3 to 6, wherein a first flanged portion (111) extending in a radial direction of the pole (11) is disposed at the second end of the pole (11), the first flanged portion (111) is in an annular shape around the axial direction of the pole (11), and the first flanged portion (111), the insulation ring (121), and the adapter plate (122) are successively stacked in the axial direction of the pole (11), and are fixedly connected.

8. The composite pole (30) according to claim 7, wherein the insulation ring (121) is a ceramic ring, and both the first flanged portion (111) and the adapter plate (122) are fastened to the ceramic ring through welding.

9. The composite pole (30) according to any one of claims 1 to 8, wherein the composite pole (30) further comprises:
a first sampling member (33), wherein the first electrode (10a) and the second electrode (10b) are respectively disposed on two opposite sides of the first sampling member (33), the first electrode (10a) and the second electrode (10b) are electrically connected to the first sampling member (33), and the first sampling member (33) is configured to electrically connect to a sampling circuit.

10. The composite pole (30) according to claim 9, wherein the first electrode (10a) and the second electrode (10b) are arranged on the two opposite sides of the first sampling member (33), and the first sampling member (33) is in a sheet shape.

11. An end plate assembly (20), comprising:
an end plate (211), wherein the end plate (211) has a first side and a second side opposite to each other, and a through hole (201) is provided on the end plate (211); and
the composite pole (30) according to any one of claims 1 to 10, wherein the connection assembly (12) is stacked on the first side of the end plate (211), the first end of the pole (11) stretches from the through hole (201) into the second side of the end plate (211) for electrically connecting to a battery cell body, and the connection assembly (12) fits with the pole (11) to close the through hole (201).

12. The end plate assembly (20) according to claim 11, wherein a sinking groove (202) is provided on the first side of the end plate (211), the sinking groove (202) surrounds the through hole (201), and at least a part of the connection assembly (12) is embedded in the sinking groove (202).

13. A battery (100), comprising:
a first battery cell (41) and a second battery cell (42); and
the composite pole (30) according to any one of claims 1 to 12, wherein the composite pole (30) is disposed between the first battery cell (41) and the second battery cell (42), the first electrode (10a) is electrically connected to the first battery cell (41), and the second electrode (10b) is electrically connected to the second battery cell (42).

14. The battery (100) according to claim 13, comprising:
a battery cell body; and
the end plate assembly (20) according to claim 11 or 12, wherein the end plate (211) covers an end of the battery cell body, and the first end of the pole (11) is electrically connected to the battery cell body.
